## Europäisches Patentamt

## European Patent Office

## Office européen des brevets

(19)

(11) Veröffentlichungsnummer: **0 047 925**

**A1**

(12)

# EUROPÄISCHE PATENTANMELDUNG

(21) Anmeldenummer: 81106910.3

(22) Anmeldetag: 03.09.81

(51) Int. Cl.³: **C 02 F 1/78**

(30) Priorität: 16.09.80 DE 3034855

(43) Veröffentlichungstag der Anmeldung:
24.03.82 Patentblatt 82/12

(84) Benannte Vertragsstaaten:
AT CH DE FR LI NL

(71) Anmelder: Linde Aktiengesellschaft
Abraham-Lincoln-Strasse 21
D-6200 Wiesbaden(DE)

(72) Erfinder: Berger, Michael, Dr.
Ascholdinger Strasse 17a
D-8000 München 71(DE)

(72) Erfinder: Lux, Horst Helmut, Dr.
Franz-Schuster-Strasse 24
D-8021 Neuried(DE)

(74) Vertreter: Schaefer, Gerhard, Dr.
Linde Aktiengesellschaft Zentrale Patentabteilung
D-8023 Höllriegelskreuth(DE)

(54) Verfahren und Vorrichtung zur Behandlung von Wasser mit Ozon.

(57) Zur Behandlung von Wasser mit Ozon wird in einem Ozonerzeuger (1) ein ozonhaltiger Sauerstoffstrom erzeugt und dieser in einer unter gleichen Druckbedingungen wie der Ozonerzeuger (1) stehenden Ozoneintragseinrichtung (2) mit dem zu behandelnden Wasser in Kontakt gebracht. Aus der Ozoneintragseinrichtung (2) wird über eine Gasleitung (5) ein vor allem nicht gelösten Sauerstoff sowie ausgegasten Stickstoff enthaltender Abgasstrom abgezogen und mit Hilfe eines Gebläses (8) über eine Trocknungseinrichtung (6) im Kreislauf zum Ozonerzeuger (1) zurückgeführt.

Zur Begrenzung des Stickstoffanteils im zurückgeführten Abgas auf einen für die Ozonerzeugung günstigen Wert ist an die Gasleitung (5) eine Zweigleitung (12) mit Regelventil (13) zum regelbaren Ablassen eines Abgasteilstroms angeschlossen. Die durch das Ablassen von Abgas über die Zweigleitung (12) sowie durch das in der Ozoneintragseinrichtung (2) stattfindene Lösen von Ozon und Sauerstoff in Wasser bedingten Sauerstoffverluste des Kreislaufsystems werden durch die Zuführung eines regelbaren Volumenstroms an Sauerstofffrischgas über eine an die Gasleitung (5) vor dem Ozonerzeuger (1) angeschlossene Gaszuleitung (9) mit Regelorgan (10) ausgeglichen.

EP 0 047 925 A1

Croydon Printing Company Ltd.

## Verfahren und Vorrichtung zur Behandlung von Wasser mit Ozon

Die Erfindung betrifft ein Verfahren zur Behandlung von Wasser mit Ozon, bei dem in einem Ozonerzeuger ein ozonhaltiger Sauerstoffstrom erzeugt, der ozonhaltige Sauerstoffstrom in einer Ozoneintragseinrichtung mit dem zu behandelnden Wasser in Kontakt gebracht, aus der Ozoneintragseinrichtung ein vor allem nicht gelösten Sauerstoff sowie ausgegasten Stickstoff enthaltender Abgasstrom abgezogen und im Kreislauf zum Ozonerzeuger wieder zurückgeführt wird, sowie eine Vorrichtung zur Durchführung des Verfahrens.

Ein derartiges Verfahren ist aus der DE-OS 25 56 328 bekannt. Bei dem dort beschriebenen Verfahren wird zur Oxidation unerwünschter Wasserinhaltsstoffe ein Teilstrom eines behandelten Wassers in einer Füllkörperkolonne unter Druck mit einem in einem mit Sauerstoff betriebenen Ozonerzeuger gewonnenen Ozon und Sauerstoff enthaltenden Gasgemisch beladen und anschließend mit dem zu behandelnden Wasser vermischt. Der dabei in der Füllkörpersäule nicht gelöste Sauerstoff wird zur Wiederverwendung zum Ozonerzeuger zurückgeführt.

Form. 5729 7.78

Das Problem bei einem solchen Verfahren ist, daß während des in der Füllkörperkolonne stattfindenden Flüssigkeits- Gas-Kontaktes ein gewißer, von Druck und Temperatur abhängiger Sickstoffanteil des im Teilstrom von vornherein gelöst vorhandenen Luftstickstoffs in die Gasphase übergeht und von dem die Füllkörperkolonne verlassenden und zum Ozonerzeuger zurückgeführten Sauertoffstrom mitgeführt wird und daß der Stickstoffanteil des zurückgeführten Sauerstoffstroms bei niedrigem Druck weit über dem für die Ozonerzeugung günstigen Wert von 10 Vol.% liegt. Bei dem bekannten Verfahren wird dieses Problem unter Berücksichtigung der Tatsache, daß bei konstanter Temperatur der ausgasende Stickstoffanteil umso niedriger ist, je höher der Druck ist, dadurch gelöst, daß die Füllkörpersäule bei Drücken über 5 bar betrieben wird. Diese Betriebsweise der Füllkörpersäule macht es aber notwendig, daß der zurückgeführte Sauerstoffstrom nach einer Trocknung vor dem Einleiten in den Ozonerzeuger auf einen für die bekannten Ozonerzeuger höchstzulässigen Betriebsdruck von 1,5 bar absolut entspannt und der den Ozonerzeuger verlassende, Ozon und Sauerstoff enthaltende Gasstrom vor dem Einleiten in die Füllkörpersäule wieder auf deren Betriebsdruck komprimiert werden muß. Dabei muß der zwischen dem auf relativ niedrigem Druck befindlichen Ozonerzeuger und der bei höherem Druck arbeitenden Füllkörperkolonne vorzusehende Kompressor regelbar ausgelegt sein, um Schwankungen der Ausgasungsrate des Stickstoffs in der Füllkörperkolonne durch entsprechende Druckkorrekturen auffangen und den Stickstoffanteil im Kreislaufsystem auf diese Weise annähernd konstant halten zu können. Schon allein die Notwendigkeit des Einsatzes eines regelbaren Kompressors muß aber als Nachteil angesehen werden, da damit ein relativ hoher Aufwand  sowohl hinsichtlich der Investitions- als auch der Betriebskosten verbunden ist. Dazu kommt noch, daß dieser Kompressor zwischen dem Ozonerzeuger und der Füllkörperkolonne dem aggressiven Ozon ausgesetzt ist, wodurch sich eine verminderte Standzeit ergibt.

Der Erfindung liegt die Aufgabe zugrunde, ein Verfahren der eingangs genannten Art sowie eine Vorrichtung zur Durchführung des Verfahrens so auszugestalten, daß insbesondere kleinere Ozon-Wasseraufbereitungsanlagen auf einfache und hinsichtlich des Investitions- und Betriebskostenaufwandes auf wirtschaftliche Weise betrieben werden können.

Diese Aufgabe wird erfindungsgemäß dadurch gelöst, daß aus dem Kreislaufsystem ein regelbarer Abgasteilstrom abgezogen und dem Kreislaufsystem ein regelbarer Volumenstrom an Sauerstofffrischgas zugeführt wird.

Mit Hilfe dieser Maßnahme gelingt es auf einfache Weise, den Stickstoffgehalt im Kreislaufsystem auch bei schwankender Ausgasungsrate in der Ozoneintragseinrichtung bei unterschiedlichem Stickstoffgehalt des zu behandelnden Wassers auf einen für den Ozonerzeuger optimalen Wert zu begrenzen. Auch kann das gesamte Kreislaufsystem und die Ozoneintragseinrichtung auf einem für den Ozonerzeuger günstigen Druckniveau betrieben werden, wobei unvermeidliche Druckverluste durch ein einfaches, vor dem Ozonerzeuger im Kreislaufsystem angeordnetes und somit nicht mehr dem aggressiven Einfluß des Ozon ausgesetztes Gebläse kompensiert werden können.

Als im Kreislaufsystem einzuhaltender Druck bietet sich dabei ein Wert von 1,5 bar absolut als zweckmäßig an, da die derzeit auf dem Markt befindlichen Röhrenozoneure maximal bei diesem Druck betrieben werden können. Die Wahl eines innerhalb der zulässigen Grenzen möglichst hohen Drucks ist insofern zweckmäßig, als die mit der Ozoneintragseinrichtung in das zu behandelnde Wasser eintragbaren Ozonmengen mit steigendem Druck in der Ozoneintragseinrichtung ebenfalls zunehmen und die Stickstoffausgasung geringer ist,

0047925

je höher der Druck ist.

Abgesehen davon, daß mit der erfindungsgemäßen Verfahrensweise beliebige Stickstoffkonzentrationen im Kreislaufsystem aufrecht erhalten werden können, sollte jedoch vorteilhafterweise der Volumenstrom des aus dem Kreislaufsystem abgezogenen Abgasteilstroms und der Volumenstrom des zugeführten Sauerstofffrischgases so bemessen werden, daß der Stickstoffgehalt und das Gasvolumen im Kreislaufsystem konstant bleiben. Damit wird unabhängig von der im Ozoneintragssystem ausgasenden Stickstoffmenge eine gleichmäßige Ozonerzeugung möglich und die in das Kreislaufsystem einzutragende Sauerstofffrischgasmenge, die vom Ozon- und Sauerstoffeintrag in der Ozoneintragseinrichtung sowie von dem Sauerstoffverlust durch die Abgasmenge abhängig ist, kann auf einem verhältnismäßig niedrigen und für eine wirtschaftliche Betriebsweise erforderlichen Wert gehalten werden.

Die Zugabemenge des Sauerstofffrischgases wird dabei zweckmäßigerweise über einen vorgegebenen Sauerstoffpartialdruck und/oder Sauerstoffvolumenanteil im Kreislaufsystem, die durch den optimalen Stickstoffvolumenanteil und den Gesamtdruck, bei dem der Ozonerzeuger betrieben wird, bestimmt sind, selbsttätig eingestellt. Auf diese Weise ist eine einfache Möglichkeit gegeben, je nach dem Volumen des aus dem Kreislaufsystem abgezogenen Abgasteilstroms und dem Volumen des eingetragenen Sauerstoffs und Ozons eine entsprechende Menge an Sauerstofffrischgas zuzuleiten.

Zur Regelung des Stickstoffanteils im Kreislaufsystem sind gemäß einer vorteilhaften Weiterbildung des Erfindungsgedankens insgesamt drei Möglichkeiten gegeben, die auch untereinander kombiniert werden können. Eine der Möglichkeiten besteht darin, den Volumenanteil des aus dem Kreislaufsystem abgezogenen Abgasteilstroms zumindest teilweise über eine kontinuierliche Meßung der Ozonkonzentration des die Ozoneintragseinrichtung verlassenden Wassers zu regeln. Ebenso läßt sich aber der Volumenanteil des aus dem Kreislaufsystem abgezogenen Abgasteilstroms zumindest teilweise über eine kontinuierliche Meßung der Ozonkonzentration des zwischen Ozonerzeuger und Ozoneintragseinrichtung vorhandenen Gasstroms regeln. Die dritte und direkteste Möglichkeit, den Volumenanteil des aus dem Kreislaufsystem abgezogenen Abgasteilstrom: zu regeln, besteht darin, den Sauerstoffgehalt im Abgasstrom der Ozoneintragseinrichtung kontinuierlich zu messen. Die Meßung des Sauerstoffgehaltes läßt sich dabei einfach und gleichzeitig sehr genau beispielsweise mit Hilfe einer Sauerstoffelektrode durchführen. Der gemessene Sauerstoffgehalt des Abgasstromes muß dann nur noch mit einem vorher in Abhängigkeit von dem für die Ozonerzeugung optimalen Stickstoffanteil leicht berechenbaren Sauerstoffanteil für das Kreislaufgas verglichen und die aus dem Kreislaufsystem abzuführende Abgasmenge entsprechend der Differenz eingestellt werden.

Eine Vorrichtung zur Durchführung des Verfahrens umfaßt einen Ozonerzeuger, eine diesem nachgeschaltete Ozoneintragseinrichtung, eine an die Ozoneintragseinrichtung angeschlossene und zum Ozonerzeuger zurückführende Gasleitung mit Gebläse zur Rückführung des Abgases aus der Ozoneintragseinrichtung in den Ozonerzeuger und eine in der Gasleitung zwischengeschaltete Trocknungsanlage. Erfindungsgemäß ist eine solche Vorrichtung dadurch gekennzeichnet, daß an die Gasleitung über ein Regelventil eine Zweigleitung zum Ablassen eines regelbaren Abgasteilstroms sowie über ein Regelorgan eine mit einer Sauerstoffquelle in Verbindung stehende Gaszuleitung angeschlossen ist.

Dabei ist das Regelventil der Zweigleitung vorteilhafterweise an einer Regelungs- und/oder Steuereinheit angeschlossen, die ihrerseits mit einer in der Gasleitung angeordneten Meßeinrichtung zur Bestimmung des Sauerstoffgehaltes im Abgas der Ozoneintragseinrichtung in Wirkverbindung steht und einen gemessenen Istwert des Sauerstoffgehaltes mit einem Sollwert vergleicht und entsprechend der Differenz die Öffnung des Regelventils einstellt.

Zur selbsttätigen Einstellung der zuzuführenden Sauerstofffrischgasmenge ist das Regelorgan der Gaszuleitung an eine ebenso in der Gasleitung angeordnete Meßeinrichtung zur Bestimm-ng des Sauerstoffpartialdrucks und/oder der Bestimmung des Sauerstoffvolumenanteils angeschlossen.

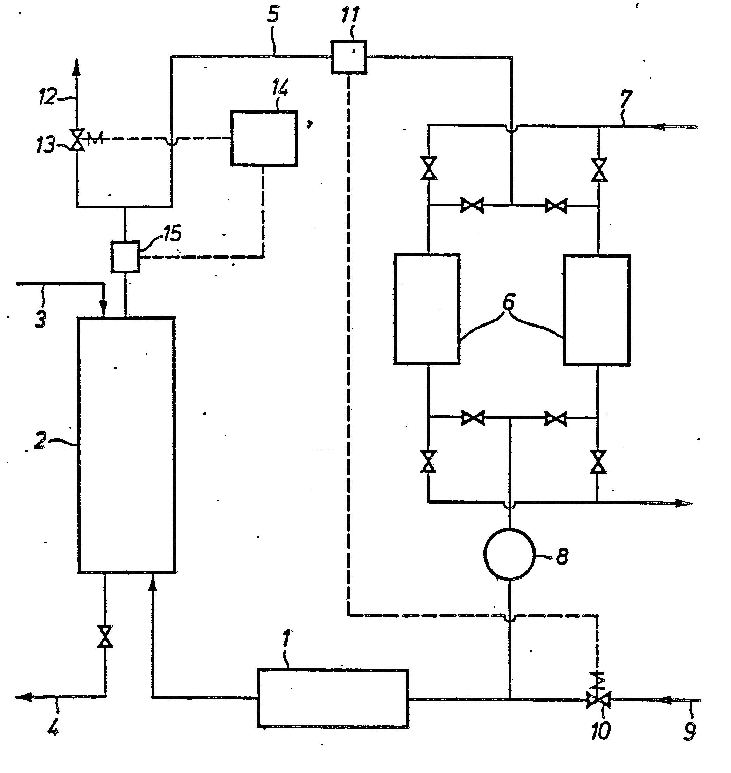

In der Zeichnung ist ein vorteilhaftes Ausführungsbeispiel einer Vorrichtung zur Durchführung des Verfahrens schematisch dargestellt, das nachstehend näher erläutert wird.

In der Figur ist mit 1 ein Ozonerzeuger, beispielsweise ein Röhrenozoneur, bezeichnet. Dem Ozonerzeuger 1 nachgeschaltet ist eine Ozoneintragseinrichtung 2, die beispielsweise als Füllkörpersäule ausgebildet sein kann. Diese weist am Kopfende einen Wasserzulauf 3 für zu behandelndes Wasser und am unteren Ende einen Wasserablauf 4 für behandeltes Wasser auf. Damit wird das am unteren Ende eingeleitete, vom Ozonerzeuger 1 kommende Ozon und Sauerstoff enthaltende Gasgemisch im Inneren der Füllkörpersäule 2 im Gegenstrom zum herabrieselnden Wasser geführt, wobei nahezu das gesamte Ozon und ein Teil des Sauerstoffs in dem zu behandelnden Wasser gelöst wird und ein von den Temperatur- und Druckbedingungen abhängiger Anteil des im Wasser von vornherein gelöst vorhandenen Luftstickstoffs in

0047925

die Gasphase übergeht. Der Ozonerzeuger 1 und die Ozoneintragseinrichtung 2 stehen dabei unter gleichen Druckbedingungen, wobei diese im wesentlichen von dem günstigsten Arbeitsdruck des Ozonerzeugers 1 abhängig sind.

Das im wesentlichen aus nichtgelöstem Sauerstoff und ausgetriebenem Stickstoff bestehende Abgas wird am Kopfende der Ozoneintragseinrichtung 2 über eine Gasleitung 5 abgezogen. Diese Gasleitung 5 führt über eine Trocknungseinrichtung 6 zurück zu dem Ozonerzeuger 1, wobei in der Gasleitung 5 zur Aufrechterhaltung unvermeidlicher Druckverluste, beispielsweise zwischen Trocknungseinrichtung 6 und Ozonerzeuger 1, ein Gebläse 8 angeordnet ist. Die Trocknungseinrichtung 6 kann wie angedeutet aus umschaltbaren, mit Kieselgel gefüllten Adsorbern, denen ein Trocknungskreislauf 7 zugeordnet ist, bestehen.

Zur Begrenzung des Stickstoffanteils in dem zum Ozonerzeuger 1 über die Gasleitung 5 zurückgeführten Abgas aus der Ozoneintragseinrichtung 2 auf einen für die Ozonerzeugung günstigen Wert ist an die Gasleitung 5 eine Zweigleitung 12 mit Regelventil 13 zum Ablassen eines regelbaren Abgasteilstroms angeschlossen. Die Regelung erfolgt dabei über eine in der Gasleitung 5 vor dem Anschluß der Zweigleitung 12 angeordnete Meßeinrichtung 15 zur Bestimmung des Sauerstoffgehaltes im Abgas der Ozoneintragseinrichtung 2 und einer eingangsseitig an diese Meßeinrichtung 15 und ausgangsseitig an das Regelventil 13 in der Zweigleitung 12 angeschlossene Regelungs- und/oder Steuereinheit 14, in der ein gemessener Istwert des Sauerstoffgehaltes mit einem einstellbaren Sollwert verglichen wird und die entsprechend der sich ergebenden Differenz die Öffnung des Regelventils 13 einstellt. Zum Ausgleich der zum einen durch das Lösen von Sauerstoff und Ozon in der Ozoneintragseinrichtung 2 im Wasser und zum anderen durch das Ablassen von Abgas über die Zweigleitung 12 bedingten Sauerstoffverluste des mit der Gasleitung 5 verwirklichten Kreislaufsystems ist an die Gasleitung 5 vor dem Ozonerzeuger 1 eine mit einer nichtdargestellten Sauerstoffquelle in Verbindung stehende Gaszuleitung 9 angeschlossen. Diese weist ein Regelorgan 10 auf, das über eine in der Gasleitung 5 angeordnete Meßeinrichtung 11 zur Bestimmung des Sauerstoffpartialdrucks oder des Sauerstoffvolumenanteils eingestellt wird.

Wie bereits erwähnt, besteht auch die Möglichkeit, anstelle der Sauerstoffmeßeinrichtung 15 ein Ozonmeßgerät entweder in der Gasleitung zwischen Ozonerzeuger und Ozoneintragseinrichtung oder in dem Wasserablauf 4 anzuordnen und mit Hilfe dieser Meßeinrichtungen und einer diesen zugeordneten Regelungs- und/oder Steuereinrichtung das Regelventil in der Abgaszweigleitung einzustellen.

Ein auf die Figur bezogenes Zahlenbeispiel soll nachstehend das erfindungsgemäße Verfahren verdeutlichen:

Über den Wasserzulauf 3 werden der Ozoneintragseinrichtung 2 $15m^3$/h Rohwasser mit einer Temperatur von 15°C und einem Sauerstoffgehalt von 0 mg/l zugeleitet. In dieses Rohwasser sollen in der Ozoneintragseinrichtung 2 pro Stunde 0,5 kg Ozon bei einem Eintragsdruck von 1,5 bar absolut eingetragen werden. Dazu wird der Ozoneintragseinrichtung 2 ein Gasstrom mit einem Ozonvolumenanteil von 3,5 Vol.% zugeleitet. Die Dichte des Ozons beträgt bei 15°C 2,03.

Bei diesen Bedingungen berechnet sich das Gesamtgasvolumen des der Ozoneintragseinrichtung 2 vom Ozonerzeuger 1 zugeleiteten Gasstroms zu $7,04m^3$/h. Unter der Voraussetzung, daß der Stickstoffvolumenanteil im Kreislaufsystem der Gasleitung 5 auf einen für die Ozonerzeugung günstigen Wert von 10 Vol.% eingestellt werden soll, ergeben sich daraus

Form. 5729 7.78

nach dem Ozonerzeuger 1 Partialgasvolumen von 6,09 m³ $O_2$/h, 0, 04 m³ $N_2$/h und 0,246 m³ $O_3$/h.

Bei einem Eintragswirkungsgrad für Ozon in der Ozoneintragseinrichtung 2 von 1 berechnet sich dann das Gesamtabgasvolumen der Ozoneintragseinrichtung 2 zu 6,25 m³/h. Darin ist ein Sauerstoffvolumen von 5,38 m³/h, ein Stickstoffvolumen von 0,87 m³/h und ein Ozonvolumen von 0 m³/h enthalten.

Das Sauerstoffvolumen richtet sich dabei nach der von Druck und Temperatur abhängigen Sättigungskonzentration. Mit der Henry-Konstanten für Sauerstoff bei 15°C ($H_{O_2}^{15°C}$), die angibt, wieviel Gramm $O_2$ in einem m³ Wasser bei einer bestimmten Wassertemperatur unter einem Sauerstoffpartialdruck von 1 bar im Gleichgewichtszustand gelöst sind, mit der vorhandenen Wassermenge (W) in m³/h, dem Sauerstoffpar-tialdruck $P_{O_2}$ (=Gesamtdruck x Sauerstoffvolumenanteil) und der Dichte des Sauerstoffs bei 15°C ($d_{O_2}^{15°C}$) ergibt sich für die Berechnung des Sauerstoffvolumens die Gleichung

$$V_{O_2} = 6,09 - \frac{H_{O_2}^{15°C} \cdot W \cdot P_{O_2} \cdot P_{gesamt}}{d_{O_2} \cdot 1000},$$

wobei das zweite Glied angibt, wieviel m³ $O_2$/h im Ozonein-tragssystem gelöst werden.

Für die Berechnung des Stickstoffvolumens im Gesamtabgasvolumen der Ozoneintragseinrichtung 2 muß berücksichtigt werden, daß ein Teil des im Wasser von vornherein gelösten Luftstickstoffs in die Gasphase übergeht. Damit ergibt sich für die Berechnung des Stickstoffvolumens nach dem Ozoneintrags-system 2 die Gleichung

$$V_{N_2} = 0,704 - \frac{H_{N_2}^{15°C} \cdot W \cdot P_{N_2} \cdot P_{gesamt}}{d_{N_2} \cdot 1000} + \frac{16,4 \cdot W}{d_{N_2} \cdot 1000},$$

wobei das dritte Glied das Volumen des bei 15°C in 15 m³ Wasser gelösten Stickstoffs angibt und die darin enthaltene Zahl 16,4 bedeutet, daß bei einem Luftdruck von 1 bar absolut 16,4 g Stickstoff in einem m³ Wasser gelöst sind.

Da der Stickstoffvolumenanteil im Kreislaufsystem der Gasleitung 5, wie anfangs ausgeführt wurde, auf einen für die Ozonerzeugung günstigen Wert von 10 Vol.% eingestellt werden soll und dieser Stickstoffvolumenanteil gemäß den berechneten Partialgasvolumen nach dem Ozonerzeuger 1 0,704 m³ $N_2$/h beträgt, müssen also aus dem Stickstoffvolumen von 0,87 m³ $N_2$/h im Gesamtabgasvolumen der Ozoneintragseinrichtung 2 0,17 m³ $N_2$/h bzw. 19,5 % über die Zweigleitung 12 aus dem Kreislaufsystem abgelassen werden. Dies bedeutet, daß auch von dem Sauerstoffvolumen der Gesamtabgasmenge 19,5 % ausgetragen werden müssen, so daß sich der über die Zweigleitung 13 abgezogene Sauerstoffverlust bei einem Sauerstoffvolumen von 5,38 m³/h der Gesamtabgasmenge zu 1,05 m³/h berechnet.

Damit ergibt sich aus dem über die Zweigleitung 13 abgezogenen Sauerstoffverlust von 1,05 m³/h, dem Sauerstoffeintrag in der Ozoneintragseinrichtung 2 von 0,71 m³/h und dem Ozoneintrag in der Ozoneintragseinrichtung 2 von 0,246 m³/h insgesamt ein Sauerstoffverbrauch von 2,01 m³/h.

Würde dagegen bei gleichen Bedingungen ohne Kreislaufsystem das gesamte Abgas aus dem Ozoneintragsystem 2 abgelassen, ergäbe dies einen Sauerstoffverbrauch von 7,16 m³/h und einen Sauerstoffverlust von 6,01 m³/h.

Patentansprüche

1. Verfahren zur Behandlung von Wasser mit Ozon, bei dem in einem Ozonerzeuger ein ozonhaltiger Sauerstoffstrom erzeugt, der ozonhaltige Sauerstoffstrom in einer Ozoneintragseinrichtung mit dem zu behandelnden Wasser in Kontakt gebracht, aus der Ozoneintragseinrichtung ein vor allem nicht gelösten Sauerstoff sowie ausgegasten Stickstoff enthaltender Abgasstrom abgezogen und im Kreislauf zum Ozonerzeuger wieder zurückgeführt wird, dadurch gekennzeichnet, daß aus dem Kreislaufsystem ein regelbarer Abgasteilstrom abgezogen und dem Kreislaufsystem ein regelbarer Volumenstrom an Sauerstofffrischgas zugeführt wird.

2. Verfahren nach Anspruch 1, dadurch gekennzeichnet, daß der Volumenstrom des aus dem Kreislaufsystem abgezogenen Abgasteilstroms und der Volumenstrom des zugeführten Sauerstofffrischgases so bemessen werden, daß der Stickstoffgehalt und das Gasvolumen im Kreislaufsystem konstant bleiben.

3. Verfahren nach Anspruch 1 oder 2, dadurch gekennzeichnet, daß die Zugabemenge des Sauerstofffrischgases über einen vorgegebenen Sauerstoffpartialdruck und/oder Sauerstoffvolumenanteil im Kreislaufsystem selbsttätig eingestellt wird.

Form. 5729 7.78

4. Verfahren nach einem der Ansprüche 1 bis 3, dadurch gekennzeichnet, daß der Volumenanteil des aus dem Kreislaufsystem abgezogenen Abgasteilstroms zumindest teilweise über eine kontinuierliche Messung der Ozonkonzentration des die Ozoneintragseinrichtung verlassenden Wassers geregelt wird.

5. Verfahren nach einem der Ansprüche 1 bis 4, dadurch gekennzeichnet, daß der Volumenanteil des aus dem Kreislaufsystem abgezogenen Abgasteilstroms zumindest teilweise über eine kontinuierliche Messung der Ozonkonzentration des zwischen Ozonerzeuger und Ozoneintragseinrichtung vorhandenen Gasstromes geregelt wird.

6. Verfahren nach einem der Ansprüche 1 bis 5, dadurch gekennzeichnet, daß der Volumenanteil des aus dem Kreislaufsystem abgezogenen Abgasteilstroms zumindest teilweise über eine kontinuierliche Messung des Sauerstoffgehaltes im Abgasstrom der Ozoneintragseinrichtung geregelt wird.

7. Vorrichtung zur Durchführung des Verfahrens nach einem der Ansprüche 1 bis 6 mit einem Ozonerzeuger, einer diesem nachgeschalteten Ozoneintragseinrichtung, einer an die Ozoneintragseinrichtung angeschlossenen und zum Ozonerzeuger zurückführenden Gasleitung mit Gebläse zur Rückführung des Abgases aus der Ozoneintragseinrichtung in den Ozonerzeuger und mit einer in der Gasleitung zwischengeschalteten Trocknungseinrichtung, dadurch gekennzeichnet, daß an die Gasleitung (5) über ein Regelventil (13) eine Zweigleitung (12) zum Ablassen eines regelbaren Abgasteilstroms sowie über ein Regelorgan (10) eine mit einer Sauerstoffquelle in Verbindung stehende Gaszuleitung (9) angeschlossen ist.

8. Vorrichtung nach Anspruch 7, dadurch gekennzeichnet, daß das Regelventil (13) der Zweigleitung (12) an eine Regelungs- und/oder Steuereinheit (14) angeschlossen ist, die ihrerseits mit einer in der Gasleitung (5) angeordneten Meßeinrichtung (15) zur Bestimmung des Sauerstoffgehaltes im Abgas der Ozoneintragseinrichtung (2) in Wirkverbindung steht und einen gemessenen Istwert des Sauerstoffgehaltes mit einem Sollwert vergleicht und entsprechend der Differenz die Öffnung des Regelventils (13) einstellt.

9. Vorrichtung nach Anspruch 7 oder 8, dadurch gekennzeichnet, daß das Regelorgan (10) an eine in der Gasleitung (5) angeordnete Meßeinrichtung (11) zur Bestimmung des Sauerstoffpartialdruckes und/oder zur Bestimmung des Sauerstoffvolumenanteils angeschlossen ist.

Europäisches
Patentamt

# EUROPÄISCHER RECHERCHENBERICHT

| | EINSCHLÄGIGE DOKUMENTE | | | KLASSIFIKATION DER ANMELDUNG (Int Cl ³) |
|---|---|---|---|---|
| Kategorie | Kennzeichnung des Dokuments mit Angabe soweit erforderlich. der maßgeblichen Teile | | betrifft Anspruch | |
| X | <u>DE - A - 2 738 812</u> (FMC)<br><br>* Seiten 1-3; Anspruch 1 *<br><br>-- | | 1-9 | C 02 F 1/78 |
| X | <u>US - A - 4 029 578</u> (A. TURK)<br><br>* Figur 1 *<br><br>----- | | 1-9 | |

**RECHERCHIERTE SACHGEBIETE (Int. Cl.³)**

C 02 F 1/78

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
  liegende Theorien oder
  Grundsätze
E: kollidierende Anmeldung
D: in der Anmeldung angeführtes
  Dokument
L: aus andern Gründen
  angeführtes Dokument
&: Mitglied der gleichen Patentfamilie. übereinstimmendes
  Dokument

Der vorliegende Recherchenbericht wurde für alle Patentansprüche erstellt.

| Rechercheort | Abschlußdatum der Recherche | Prüfer |
|---|---|---|
| Den Haag | 17-12-1981 | VAN AKOLEYEN |

EPA form 1503.1   06.78